Europäisches Patentamt

European Patent Office

Office européen des brevets

(11) Publication number: **0 118 101**
**B1**

(12) **EUROPEAN PATENT SPECIFICATION**

(45) Date of publication of patent specification: **29.08.90**

(51) Int. Cl.⁵: **B 60 B 7/00,** B 62 J 5/20

(21) Application number: **84102132.2**

(22) Date of filing: **29.02.84**

(54) Rotary indicating device.

(30) Priority: **08.03.83 JP 38848/83**
**06.02.84 JP 20365/84**

(43) Date of publication of application:
**12.09.84 Bulletin 84/37**

(45) Publication of the grant of the patent:
**29.08.90 Bulletin 90/35**

(84) Designated Contracting States:
**DE FR GB IT**

(56) References cited:
**DE-A-3 406 769**
**GB-A-1 414 897**
**GB-A-2 051 695**
**US-A-1 455 306**
**US-A-3 541 606**
**US-A-4 197 671**
**US-A-4 209 230**
**US-A-4 441 762**

(73) Proprietor: **KABUSHIKI KAISHA TOKAI RIKA DENKI SEISAKUSHO**
**1, Aza Noda Oaza Toyota Oguchi-cho**
**Niwa-gun Aichi-ken (JP)**

(72) Inventor: **Nagasaka, Chikao**
**88-2, Minamiyama Ajima Kusunoki-cho**
**Kita-ku Nagoya-shi Aichi-ken (JP)**
Inventor: **Kato, Hiroyuki 5-2, Tsubakidai-**
**Goshikien Highland**
**Aza Ichihazama Oaza Iwafujishinden**
**Nisshin-cho Aich-gun Aichi-ken (JP)**
Inventor: **Ohno, Hirofumi**
**1-11, Honami-cho Chikusa-ku**
**Nagoya-shi Aichi-ken (JP)**
Inventor: **Irifune, Shinichi**
**1-98, Miyukigaoka**
**Yokkaichi-shi Mie-ken (JP)**
Inventor: **Baba, Takeshi**
**503-103, Iwanaridai 8-chome**
**Kasugai-shi Aichi-ken (JP)**
Inventor: **Iwasa, Hiroki Fujigaoka-Gaden 1002**
**34-1, Higashiharayama Nagakute**
**Nagakute-cho Aichi-gun Aichi-ken (JP)**
Inventor: **Ohmi, Kyozo**
**86, Gohigashi Shinden-cho**
**Anjyo-shi Aichi-ken (JP)**

Courier Press, Leamington Spa, England.

**EP  0 118 101  B1**

(74) Representative: **Glawe, Delfs, Moll & Partner
Patentanwälte
Postfach 26 01 62 Liebherrstrasse 20
D-8000 München 26 (DE)**

**Description**

The present invention relates to a rotary indicating device according to the preamble part of claim 1. Such a device can be used for example, for wheel covers of a motor vehicle, indication boards of advertising apparatus, ornamental elements for toys and the like, and more particularly to a rotary indicating device which comprises a base member having an indication surface, the indication surface including an indicating region formed thereon and representing a desired image such as pictures, letters, marks and the like, the indication region being seen by an observer as a static visual image or moving image due to the after image phenomenon during the rotation of the base member.

Generally, the image formed on a rotary device can not be visually recognized by an observer as a clear image during the rotation of the rotary device. On the other hand, efforts have been made for improving the decorative wheel finishing by utilizing the rotational movement of the wheel as it is disclosed in GB—A—2 051 695 which shows a device according to the premable part of claim 1. According to this document the wheel cover is divided in concentric rings and each ring is further divided in relief patterns of moulded facets lying at angles with respect to the normal of the general surface area of the wheel cover. The facets are formed as grooves in the wheel cover and the orientations of the facets in adjacent fields are different. Due to this arrangement maximum contrast in reflectivity are obtained and this effect is enhanced when the wheel rotates. However, although an improvement of the decorative wheel finishing is achieved it is not possible to provide a desired image such as pictures and the like during the rotation of the base member.

From the above viewpoint, there has been conventionally provided a rotary indicating device, namely a wheel cover in use for motor vehicles, in Japanese Utility Model Laid-open Publication 133923/1974. The above wheel cover comprises a cover body, and an ornamental disc relatively rotatably mounted on the front surface of the body. The ornamental disc has a shaft concentrically extending from the rear surface thereof. The shaft passes through and is relatively rotatably supported by a journal mounted on the central portion of the body, and has, at its rear portion positioned beside the rear surface of the body, a weight for preventing the ornamental disc from rotating together with the body. Therefore, the image formed on the ornamental disc may be maintained in a static manner with respect to the cover body rotating together with the wheel of the vehicle, so that the image can be visually recognized by the observer who sees the advancing vehicle.

The known wheel cover as described above, however, has such disadvantages that it is complex in construction and can not produce a moving image.

Summary of the invention

It is therefore an object of the present invention to provide a rotary indicating device which is simple in construction, in which the desired image is integrally formed on an indicating surface of a rotary base member per se, and the image can be visually recognized as a static or moving image by the observer due to the after image phenomenon during the rotation of the base member.

This object is achieved by a rotary indicating device having the features given in claim 1. The dependent claims are related to further developments of the invention.

According to the present invention a rotary indicating device is provided, in which the observer located at a fixed position with respect to the rotary indicating device can receive the reflected light representing substantially the same images from the indication surface of the rotary base member more than two times per a single rotation of the base member, that is, the observer can visually recognize a clear image even if the base member is relatively low in its rotational speed.

Furthermore, according to the present invention it is possible to provide a rotary indicating device, in which the observer can recognize the image formed on the base member as a moving image when the base member is rotating at a fixed position.

In the development of the invention a rotary indicating device is provided, in which the observer can recognize the image formed on a base member as a moving image when the base member is relatively advancing with respect to the observer in a linear direction with rotation.

The new rotary indicating device comprises a rotary base member having an indication surface, the indication surface including an indication region formed thereon and representing a desired image. The indication region comprises a plurality of image elements consisting of reflecting faces. The reflection faces are inclined in the same direction and also at the same angle with respect to a standard plane perpendicular to a rotary axis of the rotary base member.

With the first embodiment as described above, when the rotary base member rotates at a rotational speed over the predetermined value, the observer located at an appropriate fixed position with respect to the device can continuously receive the reflection lights from the reflection faces of the rotary base member once per a rotation to visually recognize the desired image as a static image due to the after image phenomenon.

According to the above embodiment, since the reflection faces for collectively representing the desired image can be integrally formed on the indication surface of the rotary base member per se, that is to say, a special additional member, such as the ornamental disc provided with a wheel cover as previously described, is not necessary, and rotary indicating devices simple in construction can be provided.

According to a second embodiment of the present invention, there is provided a rotary indicating device which comprises a rotary base member having an indication surface, the indication surface including an indication region formed thereon and representing a desired image. The indication region comprising a plurality of same image element units, each of which includes a predetermined number of image elements, each consisting of corresponding reflection face. The reflection faces of each image element unit are inclined in various directions at the same angle with respect to a standard plane perpendicular to a rotary axis of the rotary base member so that when the rotary base member rotates and the incident light comes at an angle with respect to the rotary axis, the reflection faces of each image element unit alternately reflect the light into a fixed direction at a fixed rotary position of the rotary base member.

With the second embodiment as described above, the observer can visually recognize the desired image such times per a single rotation of the rotary base member as corresponding to the number of reflection faces consisting each image element unit, so that the visual image recognized by the observer becomes clearer.

According to a third embodiment of the present invention, there is provided a rotary indicating device which comprises a rotary base member having an indication surface, the indication surface including an indication region formed thereon and representing a desired image. The indication region comprises a plurality of image element units which respectively includes a desired number of image elements, each consisting of a corresponding reflection face. The reflection faces of each image element unit are inclined in various directions but at the same angle with respect to a standard plane perpendicular to a rotary axis of the rotary base member so that when the rotary base member rotates and the incident light comes at an angle with respect to the rotary axis, the reflection faces of each image element unit alternately reflect the light into a fixed direction at a fixed rotary position of the rotary base member. Thus, when the rotary indicating device rotates at a rotational speed over a predetermined value, the visual image reflected from the indication surface toward the observer appears to be moving depending on the variation of the number of reflection faces reflecting light toward the observer at a fixed rotary position of the base member.

According to the fourth embodiment of the present invention, there is provided a rotary indicating device which comprises a rotary base member having an indication surface, the indication surface including an indication region formed thereon and representing a desired image. The indication region comprises a plurality of image element units which respectively include a desired number of image elements, each consisting of a corresponding reflection face. The reflection faces of each image element unit are inclined at such angles with respect to a standard plane perpendicular to a rotary axis of the rotary base member that when the rotary base member relatively advances with respect to an observer in a linear direction along a plane including the standard plane with rotation at a rotational speed over a predetermined value, the reflection faces of each image element unit for reflectinig light toward the observer may change in turn. Thus, when the rotary indicating device advances with rotation at a rotational speed over a predetermined value, the visual image reflected from the indication surface toward the observer appears to be moving, depending on the advancement of said base member.

Brief description of the drawings

These and other objects and features of the present invention will become apparent from the following description taken in conjunction with the preferred embodiments thereof, with reference to the accompanying drawings, in which:

Figure 1a is a front elevational view of a rotary indicating device according to a first embodiment of the present invention;

Figure 1b is an enlarged front elevational view illustrating a part of a reflection region of the rotary indicating device shown in Figure 1a;

Figure 1c is a longitudinally sectioned view of a rotary indicating device shown in Figure 1b;

Figures 1d, 1e, 1f, 1h and 1k are, respectively, views similar to Figure 1c, illustrating modifications of the first embodiment shown in Figure 1c;

Figure 1g is a fragmentary perspective view also illustrating a modification of the first embodiment;

Figures 1i and 1j are, respectively, a side elevational diagram and a top plan diagram respectively explanatory of a manner in which an incident light is reflected at a wheel cover mounted on a motor vehicle, the wheel cover being composed of the rotary base member according to the modification shown in Figure 1h.

Figure 2 is a schematic diagram explanatory of the manner in which the incident light is reflected at the reflection faces of the rotary indicating device shown in Figure 1c;

Figure 3a is an enlarged front elevational view illustrating an essential part, i.e., an image element unit, of the rotary indicating device according to a second embodiment of the present invention;

Figure 3b is a perspective view illustrating a modification of a second embodiment shown in Figure 3a;

Figure 3c is a diagram illustrating an essential part of an indication region employing the image element units shown in Figure 3a or 3b, with the arrangement of the reflection faces indicated by reference symbols per se;

Figures 4a, 4b, 4c and 4d are, respectively, front elevational views illustrating the rotary indicating device, at different rotary positions, provided with the image element units shown in Figure 3c;

Figure 5 is a view similar to Figure 3c illustrating an indication region according to a third embodiment of the present invention;

Figures 6a, 6b, 6c and 6d are, respectively, views similar to Figure 5, illustrating a rotary indicating device shown in Figure 5 at different rotary positions;

Figure 7 is a view similar to Figure 5 illustrating a modification of the third embodiment of the present invention;

Figures 8a, 8b, 8c and 8d are, respectively, views of the rotary indicating device of Figure 7, similar to Figures 6a to 6d;

Figures 9a and 9b are views similar to Figure 3c, respectively, illustrating parts of indication regions according to the modifications of the indication region in Figure 3c;

Figure 10a is a view similar to Figure 3b illustrating an image element unit according to a fourth embodiment of the present invention;

Figure 10b is a schematic perspective diagram explanatory of the manner in which the image formed on the rotary indicating device shown in Figure 10a appears to be moving according to the linear advancement of the rotary indicating device; and

Figure 10c is a schematic top plan diagram explanatory of the manner in which the reflection faces of each image element unit shown in Figure 10a alternately reflect the lights toward the observer, depending on the advancing positions of the rotary indicating device.

Detailed description of the invention

Before the description of the present invention proceeds, it is to be noted that like parts are designated by like reference numerals and symbols throughout several views of the accompanying drawings.

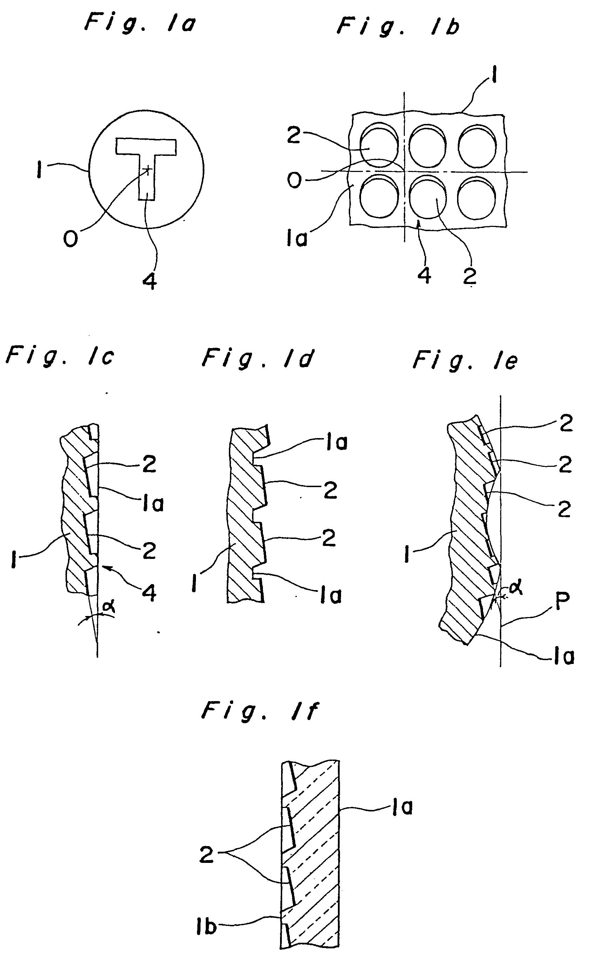

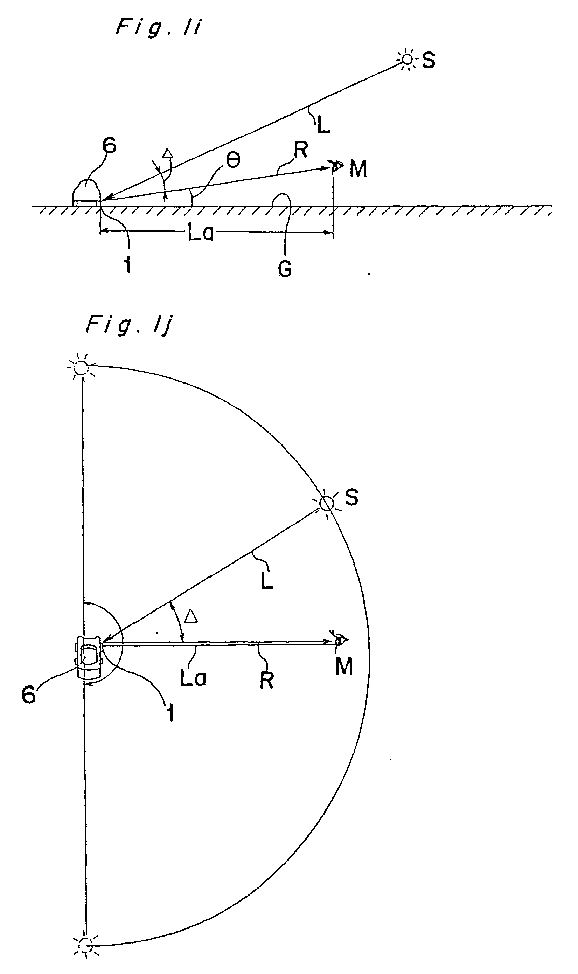

Referring first to Figures 1a, 1b and 1c, there is provided a rotary indicating device according to a first embodiment of the present invention which may be preferably employed, for example, for wheel covers of motor vehicles, indication boards of advertising apparatus, ornamental elements for toys, and the like. The rotary indicating device has a rotary base member 1 which is generally in the form of a circular plate and is preferably made with synthetic resin having a dark color with poor light reflection. The base member 1 is provided with a front surface, namely indication surface 1a in this embodiment, including an indication region 4 formed thereon and representing a desired image, i.e., by way of example, an alphabet letter "T", in the illustrated embodiment. As shown in Figures 1b and 1c, the indication region 4 in the form of "T" comprises a plurality of image elements or flat reflection faces 2 which are scattered on the reflection region 4 to collectively form "T", and are composed of bottom faces of recesses formed on the indication region 4 and covered by a reflection layer such as a metal plating layer or a deposited metal layer.

The reflection faces 2 are so designed as to be inclined in the same direction and at the same appropriate angle α with respect to a standard plane, i.e., the front surface 1a, perpendicular to a rotary axis O of the base member 1.

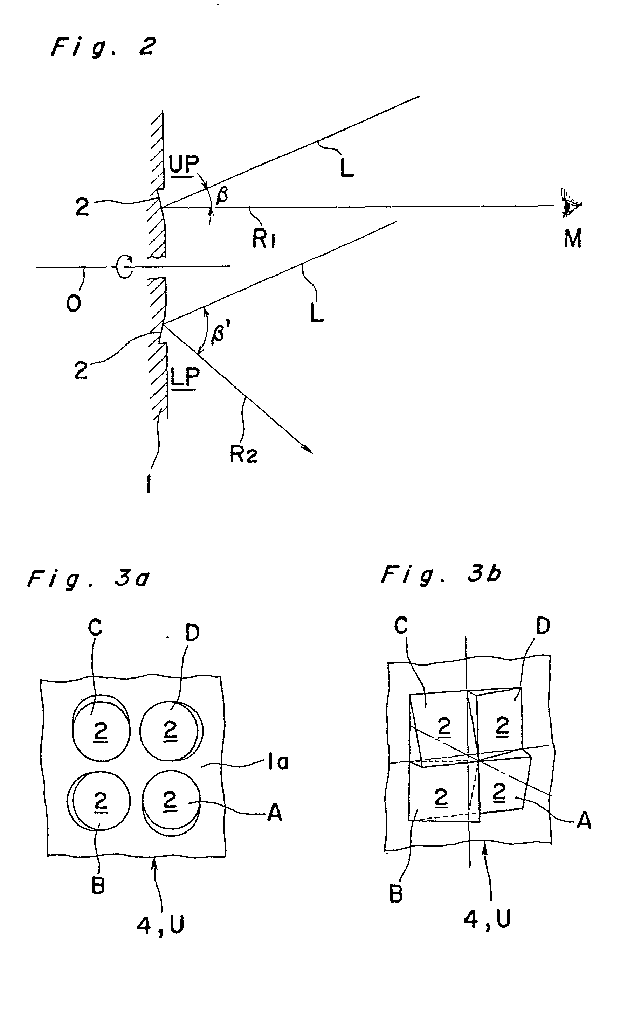

Referring to Figure 2, which diagrammatically illustrates a manner in which a reflection face 2 takes two rotary positions UP and LP diametrically opposite to each with respect to the rotary axis O. On the supposition that the light L from a light source (not shown) is being projected toward the base member 1 and that observer M is located at such a position with respect to the rotary indicating device that the reflective light R1 reflected at a reflection face 2 located at the upper rotary position UP is directed toward the eyes of the observer M, the angle between the incident light L and the reflected light R1 being indicated by a reference symbol β, the reflected light reflected at the reflection faces which are positioned at various rotary positions including the lower position LP and other than said upper rotary position UP are not respectively directed toward the eyes of the observer M. For example, the reflected light reflected at the reflection face 2 taking the lower rotary position LP is directed below the eyes of the observer, the angle β' between the incident light L and the reflected light R2 assuming an angle remarkably larger than the angle β. Accordingly, the observer taking an appropriate fixed position with respect to the rotary indicating device as described above, may visually recognize the image "T" once per a single rotation of the base member 1, and thus when the rotary base member rotates at a rotational speed over a predetermined value, the observer may visually recognize the individual images reflected from the indication region taking the upper rotary position UP each rotation thereof, as a single static image "T" due to the after image phenomenon.

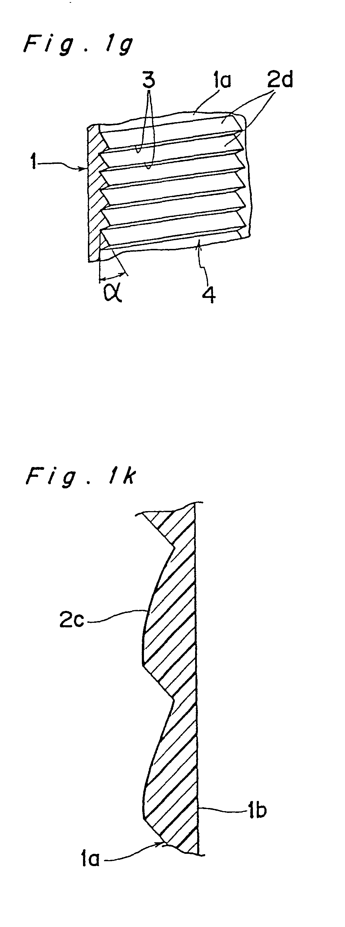

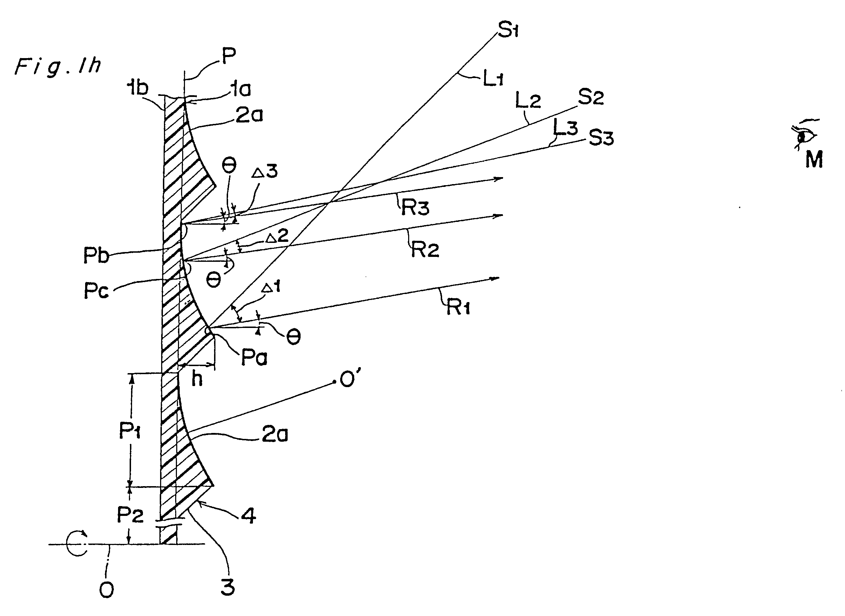

Referring to Figure 1d, there is provided a modification in which the reflection faces 2 are respectively formed on top faces of projections rising over the front surface 1a. Further, the indication surface 1a may be modified as shown in Figure 1e in which the indication surface 1a is curved, but each angle α of the reflection faces 2 with respect to the standard plane P is still maintained. Still further, the rotary base member 1 may be made, as shown in Figure 1f, by a thin transparent plate. The indication surface is composed of a rear surface 1b of the thin transparent plate. Still further, the indication region 4 may be formed as shown in Figure 1g. The indication region 4 shown in Figure 1g has a saw-teeth cross-section and comprises a plurality of image elements which consist of flat reflection faces 2d respectively extending in a predetermined direction in parallel relation to each other to collectively form "T", and non-reflection faces 3 also extending in said predetermined direction to connect the neighboring reflection faces 2d to each other. The reflection faces 2d are so designed as to be inclined in the same direction and at the same

appropriate angle α with respect to a standard plane, i.e., the front surface 1a, perpendicular to a rotary axis O of the base member 1.

Referring to Figures 1h, 1i, 1j, and 1k, there are further improved modifications of said first embodiment. Each reflection faces 2a shown in Figure 1h are, respectively, formed concave at the same radius of curvature, and slightly outwardly extend in parallel relation to each other from the standard plane P perpendicular to the rotary axis O. The width P1 of each reflection face 2b is so designed as to be sufficiently larger than the width P2 of each non-reflection face 3. In addition, each reflection face 2c may be also formed convex as shown in Figure 1k.

Referring again to Figure 1h, assuming now that the observer M is located at a fixed position with respect to the rotary indicating device and the light source takes three typical positions S1, S2 and S3 different from each other in height, with respect to the rotary base member 1, the different incident light L1, L2 and L3 from the light source at S1, S2 and S3 may be reflected at each reflection faces 2a and directed toward the eyes of the observer M. In other words, in connection with the incident light L1, the light R1 reflected at a relatively appropriately lower point Pa of each reflection face 2a may be directed toward the eyes of the observer M, an angle θ being made between the reflected light R1 and the rotary axis O. Meanwhile, in connection with the other light L2 and L3, the light R2 and R3 respectively reflected at a relatively appropriately higher position Pb and an intermediate position Pc of each reflection face 2a may be also directed toward the eyes of the observer, the R2 and R3 being respectively making the same angle θ with respect to the rotary axis O. Thus, the observer M can visually recognize the image on the rotary base member 1 even if the light source takes various positions with respect to the rotary base member 1. As a matter of course, the angle Δ1, Δ2 and Δ3 between each of reflected lights R1, R2 and R3, and the rotary axis O should be included at an appropriate range of angle which is defined by the radius of curvature and the width P1 of each reflection face 2a and the inclination of each reflection face 2a to the standard plane P and other dimensions. In addition, the observer M may visually recognize the image on the rotary base member 1 even if he takes by himself different positions with respect to the rotary base member 1 and the light source. Furthermore, if the observer M sees the rotating base member 1 while he is moving with respect to the rotary base member 1, the image appears to him to be slightly rotating.

It is to be noted that the above modification may be preferably applied to wheel covers for motor vehicles. Referring to Figures 1i and 1j, assuming that the observer M is located at a certain fixed position in a street and a motor vehicle 6 is passing in a linear direction ahead of the observer M and the sun S as the light source takes a certain position as shown in Figures 1i and 1j, the angle Δ made between the incident light L and the line La connecting the motor vehicle 6 and the observer M gradually varies depending on the advancing position of the motor vehicle 6. Furthermore, as a matter of course, the sun S takes various positions with respect to the motor vehicle 6 and the observer M to change the angle Δ depending on the time of day and also the seasons. Still further, said angle Δ is also changeable due to the angle θ made between the line La and the surface G of the street, i.e., the distance between the observer M and the motor vehicle 6. However, according to the above second embodiment, even if the angle Δ changes, the observer M can visually recognize the image on the wheel cover 1 as long as the angle Δ is included in a permissible range of angle which is defined by the configuration and dimensions of the reflection faces 2a on the wheel cover.

The inventors of the present invention have carried out the following experiment with a model and obtained sufficient results as will be described later.

Conditions for the experiment

(1) Configurations

The model was formed similar in configuration to the wheel cover for the motor vehicle and so as to have two neighboring indication regions respectively representing the same image "T", one indication region having the reflection faces 2 as shown Figure 1g, while the other indication region having the reflection faces 2a as shown Figure 1h.

(2) Dimensions
    (a) A width P1 of both reflection faces 2 and 2a ... 0.76 mm.
    (b) Distance h of both reflection faces 2 and 2a ... 0.24 mm.
    (c) Radius of the curvature of the reflection face 2a ... 1.34 mm.

(3) Operating conditions
    (1) Rotational speed of the motor ... 1,500 rpm.
    (2) As shown in the following Table 1, the experiment has been carried out under various conditions determined by the combination of the angles γ and θ selected arbitrary. In addition, the conditions are indicated by marks X in the Table 1, and the symbol γ indicates the angle made between the incident light and the rotary axis of the rotary base member, while the symbol θ indicates the angle made between the reflected light and said rotary axis.

6

TABLE 1

| Angle (γ) | Angle (θ) | | | | | | |
|---|---|---|---|---|---|---|---|
| | 10° | 15° | 20° | 25° | 30° | 35° | 45° |
| 10° | X | | X | | X | | X |
| 15° | X | | | | | | |
| 25° | X | X | | X | | X | |
| 35° | X | | | | | | |
| 40° | X | | X | | | | |
| 45° | X | | | | | | |

Result

(1) Regarding the image according to the first embodiment, the image could be distinctively recognized at the four conditions, i.e., I angle γ (10°), angle θ (20°), II angle γ (15°), angle θ (15°), III angle γ (25°), angle θ (10°) IV angle γ (25°), angle θ (15°).

(2) Regarding the image according to the second embodiment, the image could be distinctly recognized under all of the conditions.

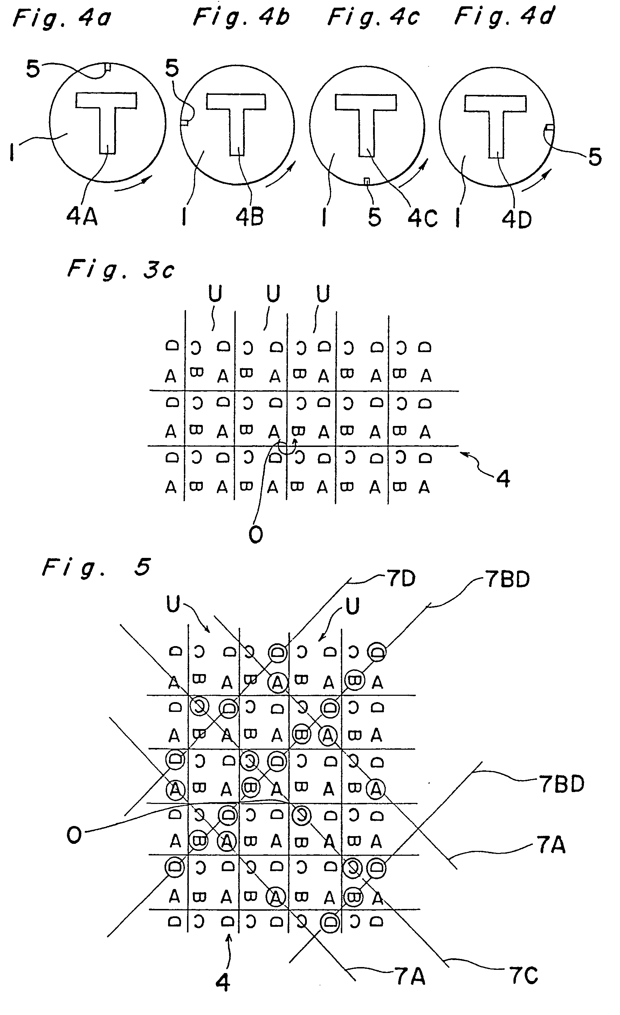

Referring to Figures 3a to 3c and 4a to 4d, 5, there is provided a further improved rotary indicating device according to a second embodiment of the present invention, in which the indication region 4 comprises a plurality of same image element units U regularly arranged thereon. Each image element unit U may comprise a various number of reflection faces, but the illustrated embodiment comprises four reflection faces respectively indicated by reference symbols A, B, C and D in Figure 3a which illustrates only one unit U. The reflection faces 2 shown in Figure 3a are basically similar in construction to the ones in Figures 1b and 1c, that is to say, each reflection face is inclined at the same angle with respect to a standard plane or a front surface 1a. But, in this embodiment, each of the reflection faces A to D is oriented in various directions having a phase difference of 90° from each other. In addition, the reflection faces 2 of each image element U may also be formed by projections having inclined top reflection faces A to D as shown in Figure 3b.

The indication region including the image "T" formed by the arranged image element units as shown in Figures 3a or 3b, is partially indicated in Figure 3c, in which the reference symbols A to D per se substitute for the reflection face 2 and the orientation of the symbols A to D represent the phase angles of the reflection face corresponding to them in Figures 3a or 3b. Referring to Figures 4a to 4d, assuming now that the light reflected at the reflection faces A are directed toward the observer located at an appropriate fixed position with respect to the rotary indicating device so that the observer can visually recognize the image "T" when the base member 1 takes a first rotary position as shown in Figure 4a, the rotary positions being indicated by a mark 5 provided on a fixed peripheral portion of the base member 1, and the image "T" will be also recognized by said observer in turn at other rotary positions, as shown in Figures 4b, 4c and 4d, in a manner as follows.

Assuming now that the base member 1 rotates in a direction indicated by an arrow in Figures 3c and 4a to 4d, the reflection faces B, C and D of each image element unit U in the indication region 4 will, in turn, reflect the light toward the observer at each rotary angle of 90° so that the images 4B, 4C and 4D respectively formed by the corresponding reflection faces B, C and D to indicate "T" may be visually recognized in turn by the observer. Accordingly, the observer can recognize the image "T" four times a per single rotation of the base member 1, so that an image formed on the eyes of the observer due to the after image phenomenon will be improved in clearness of the image as compared with the first embodiment shown in Figures 1a, 1b, and 1c.

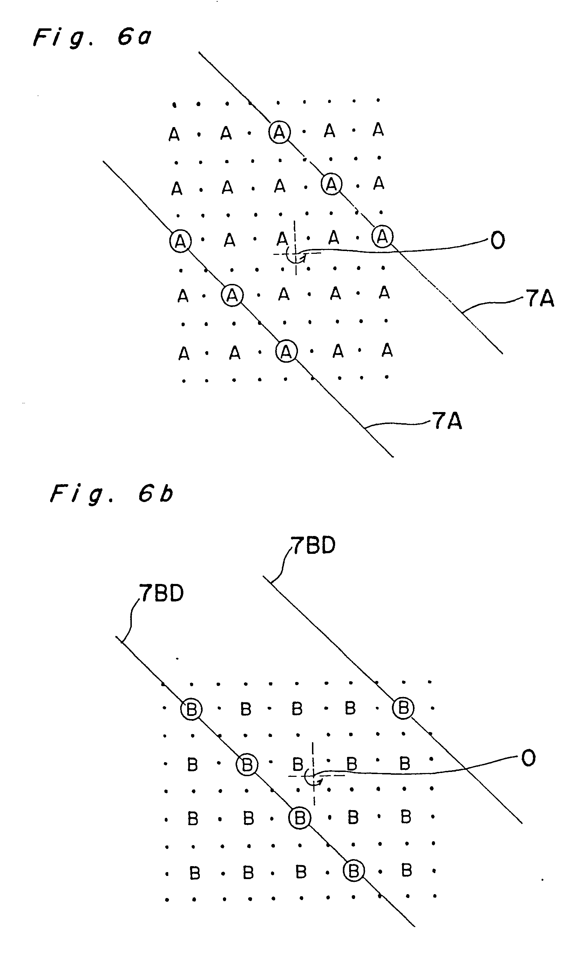

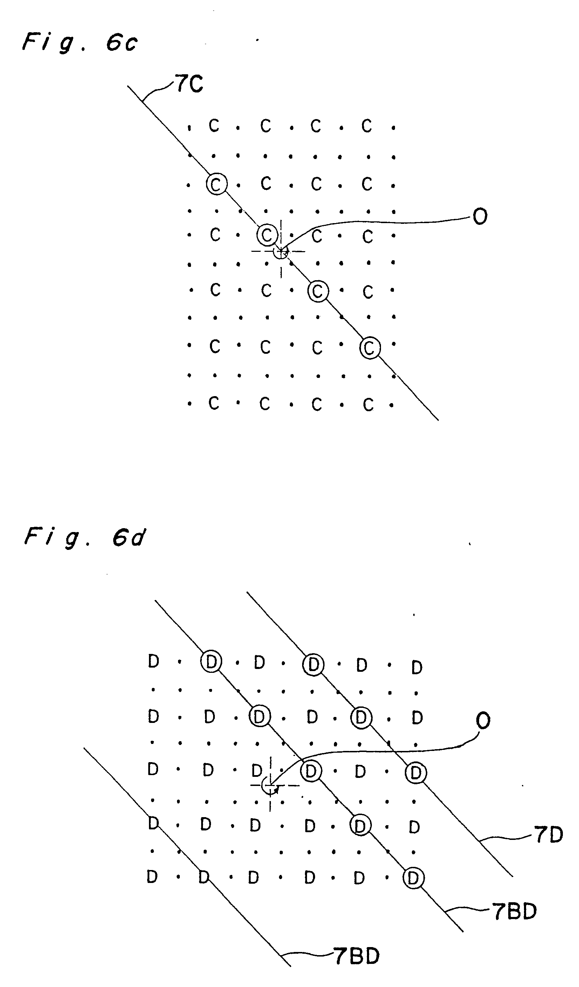

Referring to Figures 5 and 6a to 6d, there is provided a third embodiment in which non-reflection lines arranged in the indication region 4 appear to be moving parallel during the rotation of the base member 1.

As shown in Figure 5, the arrangement of the image element units U in the indication region 4 and the arrangement of the reflection faces 2 in each of the image element units U are respectively, substantially the same as those of Figure 3c, but in this embodiment, some desired reflection faces in some desired image element units U are treated so as to make no or poor reflection, the non-reflection faces being indicated by the circles enclosing the reference symbols A, B, C and D. The non-reflection faces are aligned on non-reflection lines 7A, 7BD, 7C and 7D substantially arranged in a lattice. The detailed manner or regulation as to the arrangement of the non-reflection faces in the indication region, which may be different to understand from Figure 5, will become apparent from the following description referring to Figures 6a to 6d.

Figures 6a to 6d respectively illustrate essential parts of the indication region 4 of the rotary base member 1 taken at different rotary positions having a phase difference of 90° from each other. In addition, in order to simplify the drawings, in Figures 6a to 6d, the reflection faces directing reflection lights in directions different from the observer are indicated merely by points. As shown in Figure 6a, illustrating the initial rotary position of the rotary base member 1, the image visible to the observer are composed of only reflection faces A of each image element unit U, and includes non-reflection lines 7A. And subsequently, in the following rotary positions of the rotary base member 1, as shown in Figures 6b, 6c and 6d, the images are alternately composed of the reflection faces B, C and D of each image element unit, but alternately includes non-reflection lines 7BD, 7C or 7D. Therefore, the non-reflection lines appear to be gradually moving parallel in a slanting direction.

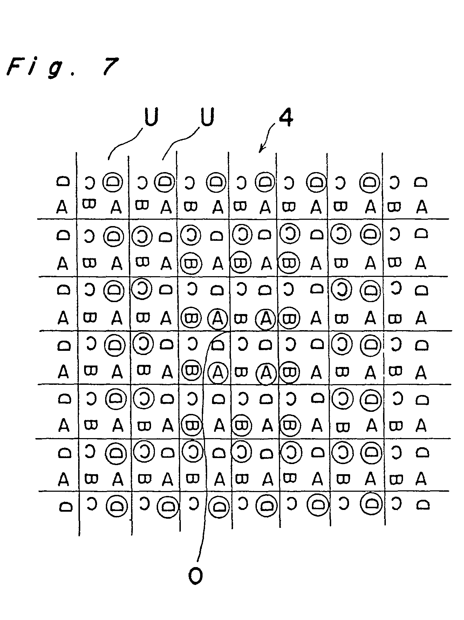

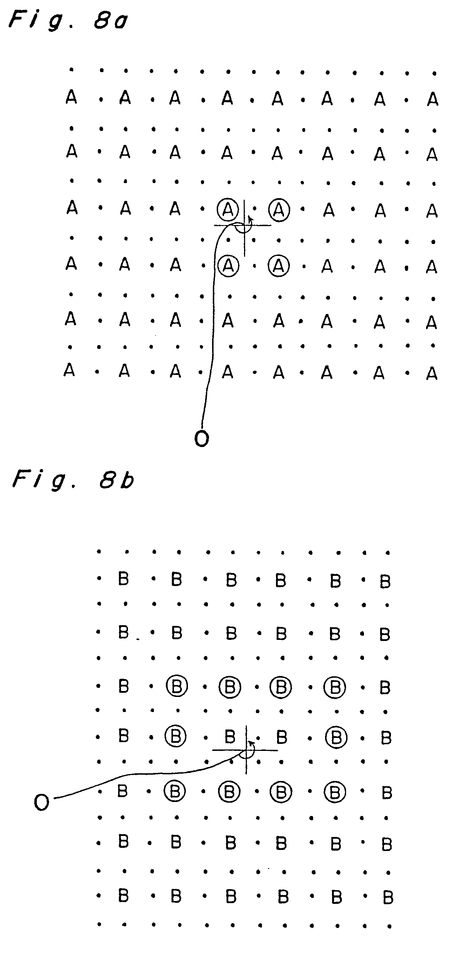

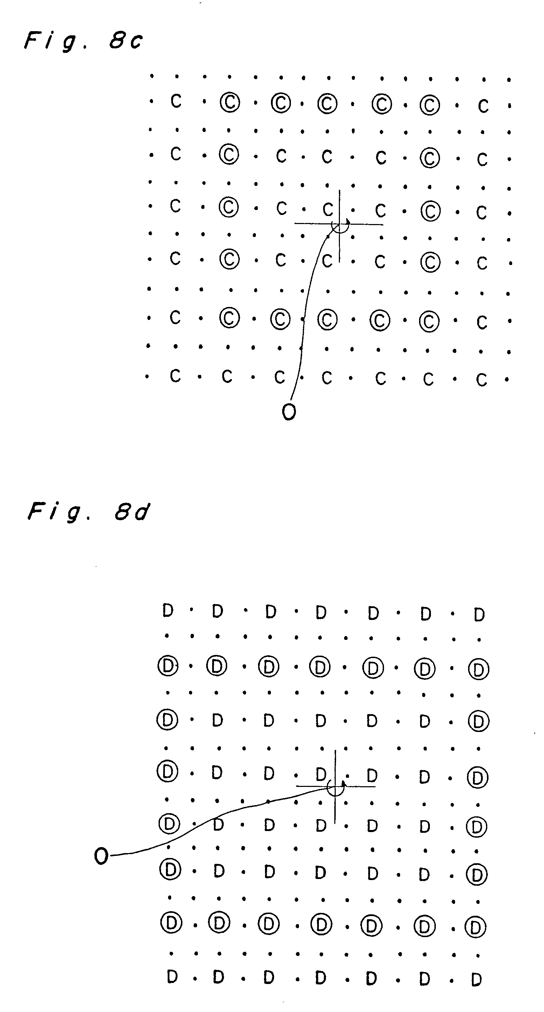

The moving manner of the image visible to the observer can be modified as desired by the variation of the arrangement as to the non-reflection faces or the reflection faces. In Figures 7 and 8a to 8d are illustrated such a modification in which a substantially rectangular non-reflection line included in the visual image appears to be moving so as to radially outwardly expand. In the modification, the non-reflection faces A, B, C and D are arranged as shown in Figure 7. The rotary positions of the base member 1 are illustrated in Figures 8a to 8d in the same manner as Figures 6a to 6d. The visual images are alternately composed of the reflection faces A, B, C or D of each image element unit U and alternately include non-reflection faces A, B, C or D which respectively, collectively form substantially rectangular lines. It will be readily seen that the rectangular lines composed, in turn, of groups of non-reflection faces A, B, C or D radially outwardly extend according to the rotation of the base member 1.

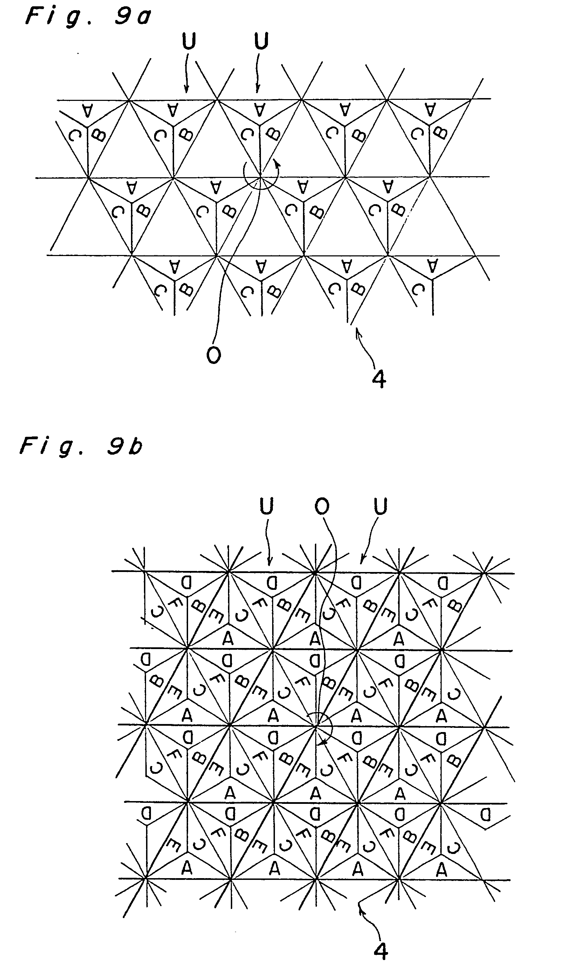

Meanwhile, although in any of the proceeding embodiments as described above, each image element unit are composed of four image elements or four reflection faces, the image element unit may be composed of less or more numbers of reflection faces. For example, each image element unit U included in the indication region 4 is composed, in Figure 9a on one hand, of three reflection faces A, B and C having a phase difference of 90° from each other so that the observer may visually recognize the image three times per a single rotation of the base member, and, in Figure 9b on the other hand, is composed of six reflection faces A, B, C, D, E and F having a phase difference of 60° from each other so that the observer may visually recognize the image six times per a single rotation of the base member.

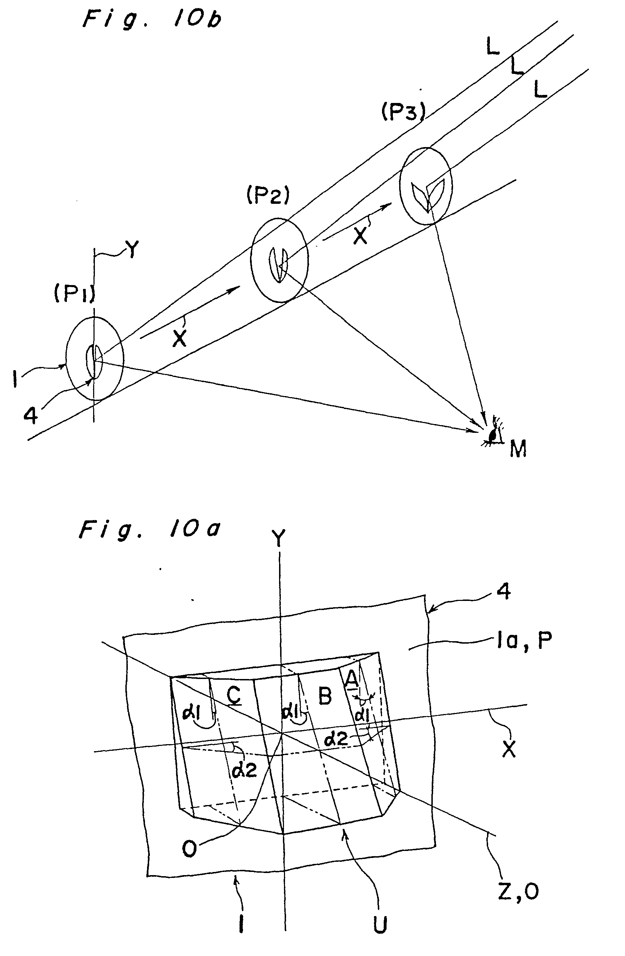

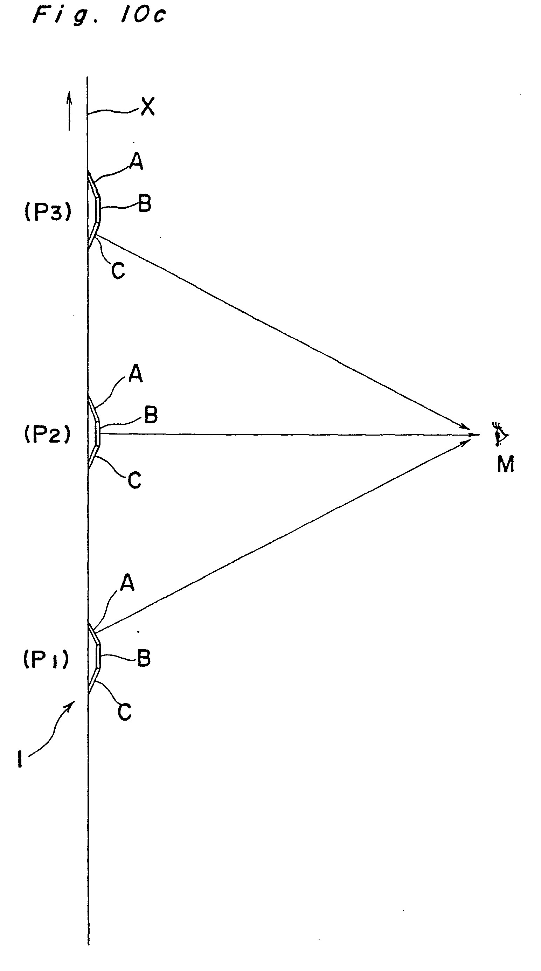

Finally, referring to Figures 10a to 10c, there is provided a fourth embodiment according to the present invention in which the image formed on the rotary base member appears to the observer to be moving as desired when the base member advances in a linear direction with rotation. This embodiment may be preferably adapted to, for example, wheel covers for a motor vehicles as a rotary indicating device.

According to the fourth embodiment, the rotary base member provided for the rotary indicating device has an indication region 4 indicating an image, i.e., a flower in this embodiment, the indicating region 4 being composed of a plurality of image element units U in substantially the same manner as the former embodiments, but in this embodiment, each image element unit U basically comprises three reflection faces A, B and C as illustrated in Figure 10a. The reflection faces A, B and C are respectively formed on the peripheral surface of a projection protruding forwardly from the front surface 1a, i.e., the standard plane of the base member 1. In Figure 10a are illustrated space coordinate axes X, Y and Z, the axis Z corresponding to the rotary axis O. Each of the reflection face A, B and C are respectively inclined at an appropriate angle α1 with respect to a plane containing two coordinate axes X and Y, viewed in a Y-axial direction. The side reflection faces A and B are additionally oppositely inclined at an appropriate angle α2 with respect to said plane, viewed in X-axial direction.

Referring to Figures 10b and 10c, on the supposition that the rotary indicating device advances, with rotation, in a linear direction indicated by an arrow along the axis X with respect to an observer M located at a fixed position, and incident light comes at an appropriate angle with respect to the base member 1, the observer M alternately recognizes reflection lights from different reflection faces A, B and C of each image element unit U according to advancing positions of the rotary indicating device. Namely, when the rotary indicating device passes through an appropriate approaching point P1, the reflected lights from only the reflection faces A are directed toward the observer M. Subsequently, when the rotary indicating device advances to a point P2 ahead of the observer M, the reflected lights from only the reflection face B are directed toward the observer, and finally, when the rotary indicating device passes through an appropriate leaving point B3, the reflection lights from only the reflection faces C are directed toward the observer M. Accordingly, the observer M visually recognizes, in turn, the images alternately formed by the reflection faces A, B and C depending on the advancing points P1, P2 and P3 of the rotary indicating device. Therefore, in order to change the visual image to the observer depending on the advancing points of the rotary indicating device, in this embodiment, the number of the reflection faces of each image element unit U are differed from each other as desired. That is to say, the reflection faces of the image element units U are partially treated so as to produce no or poor reflection so that reflected light from the reflection faces A indicate a first image, i.e., a closed flower in the illustrated embodiment. Also, the reflection faces B and C of the image element units U respectively, partially treated so as to produce no or poor reflection so that the reflected light from the reflection faces B and C indicates second and third images, i.e., a slightly opened flower and completely opened flower in said embodiment. Thus, the flower formed on the base member appears to the observer to be gradually opening according to the advancement of the rotary indicating device.

8

# EP 0 118 101 B1

**Claims**

1. A rotary indicating device which comprises a rotary base member (1) having an indication surface (1a, 1b), said indication surface (1a, 1b) including an indication region (4) formed thereon and representing a desired image, said indication region (4) comprising a plurality of image elements consisting of reflection faces (2; 2a, 2b, 2c, 2d), characterized in that said reflection faces (2; 2a, 2b, 2c, 2d) are inclined in the same direction and at the same angle α with respect to a standard plane (P, 1a) perpendicular to a rotary axis (O) of said rotary base member (1) and that said reflection faces (2a, 2b, 2c) respectively are curved at the same radius of curvature and extend in parallel relation to each other.

2. A rotary indicating device as claimed in claim 1, wherein said indication surface is composed of a front surface (1a) of said rotary base member (1).

3. A rotary indicating device as claimed in claim 1, wherein said rotary base member (1) is made by a thin transparent plate, of a rear surface (1b) of which said indication surface is composed.

4. A rotary indicating device as claimed in claim 1, wherein said reflection faces are respectively composed of fragmental faces (2, 2b) scattered in said indication region (4).

5. A rotary indicating device as claimed in claim 1, wherein said reflection faces are respectively composed of elongated faces (2a, 2c, 2d) extending in a predetermined direction in parallel relation to each other.

6. A rotary indicating device as claimed in claim 1, wherein said reflection faces (2a, 2b) are formed concave.

7. A rotary indicating device as claimed in claim 1, wherein said reflection faces (2c) are formed convex.

**Patentansprüche**

1. Rotierende Anzeige mit einem rotierenden Basiselement (1) mit einer Anzeigefläche (1a, 1b), wobei diese Anzeigefläche (1a, 1b) einen Anzeigebereich (4) aufweist, der auf dieser ausgebildet ist und ein gewünschtes Bild repräsentiert, wobei der Anzeigebereich (4) mehrere Bildelemente, bestehend aus Reflektionsflächen (2, 2a, 2b, 2c, 2d) aufweist, dadurch gekennzeichnet, daß die Reflektionsflächen (2, 2a, 2b, 2c, 2d) in der gleichen Richtung und mit dem gleichen Winkel α zu einer Standardebene (P, 1a) im rechten Winkel zu einer Rotationsachse (O) des rotierenden Basiselements (1) geneigt sind, und daß die Reflektionsflächen (2a, 2b, 2c) jeweils mit dem gleichen Krümmungsradius gekrümmt sind und zueinander parallel liegen.

2. Rotierende Anzeige nach Anspruch 1 dadurch gekennzeichnet, daß die Anzeigefläche aus einer Frontfläche (1a) des rotierenden Basiselements (1) zusammengesetzt ist.

3. Rotierende Anzeige nach Anspruch 2 dadurch gekennzeichnet, daß das rotierende Basiselement (1) durch eine dünne transparente Platte gebildet ist, aus deren rückwärtiger Fläche (1b) die Anzeigefläche zusammengesetzt ist.

4. Rotierende Anzeige nach Anspruch 1 dadurch gekennzeichnet, daß die Reflektionsflächen jeweils aus Teilflächen (2, 2b) zusammengesetzt sind, die im Anzeigebereich (4) verteilt sind.

5. Rotierende Anzeige nach Anspruch 1 dadurch gekennzeichnet, daß die Reflektionsflächen jeweils aus länglichen Flächen (2a, 2c, 2d) zusammengesetzt sind, die sich in einer vorbestimmten Richtung parallel zueinander erstrecken.

6. Rotierende Anzeige nach Anspruch 1 dadurch gekennzeichnet, daß die Reflektionsflächen (2a, 2b) konkav geformt sind.

7. Rotierende Anzeige nach Anspruch 1 dadurch gekennzeichnet, daß die Reflektionsflächen (2c) konvex geformt sind.

**Revendications**

1. Dispositif indicateur rotatif qui comporte un organe rotatif de base (1) ayant une surface indicatrice (1a, 1b), cette surface (1a, 1b) comprenant une région indicatrice (4) formée sur elle et représentant une image voulue, la région indicatrice (4) comprenant plusieurs éléments d'image formés de faces réfléchissantes (2; 2a, 2b, 2c, 2d), caractérisé en ce que les faces réfléchissantes (2; 2a, 2b, 2c, 2d) sont inclinées dans la même direction et suivant le même angle α par rapport à un plan de référence (P, 1a) qui est perpendiculaire à un axe de rotation (O) de l'organe rotatif de base (1), et en ce que les faces réfléchissantes (2a, 2b, 2c) sont courbées avec un même rayon de courbure et sont disposées parallèlement les unes aux autres.

2. Dispositif indicateur rotatif selon la revendication 1, dans lequel la surface indicatrice est composée d'une surface avant (1a) de l'organe rotatif de base (1).

3. Dispositif indicateur rotatif selon la revendication 1, dans lequel l'organe rotatif de base (1) est formé d'une mince plaque transparente, la surface indicatrice étant composée par la surface arrière (1b) de cette plaque.

4. Dispositif indicateur rotatif selon la revendication 1, dans lequel les faces réfléchissantes sont formées de faces fragmentaires (2, 2b) dispersées dans la région indicatrice (4).

5. Dispositif indicateur rotatif selon la revendication 1, dans lequel les faces réfléchissantes sont composées respectivement de faces allongées (2a, 2c, 2d) ayant une direction prédéterminée parallèlement les unes aux autres.

6. Dispositif indicateur rotatif selon la revendication 1, dans lequel les faces réfléchissantes (2a, 2b) sont réalisées avec une forme concave.

7. Dispositif indicateur rotatif selon la revendication 1, dans lequel les faces réfléchissantes (2c) sont réalisées avec une forme convexe.

Fig. Ia

Fig. Ib

Fig. Ic

Fig. Id

Fig. Ie

Fig. If

1

Fig. 1g

Fig. 1k

*Fig. 1h*

P

1b 1a

2a

θ △3

Pb △2

Pc θ R3

R2

△1

θ R1

Pa

h

O'

P1 2a

P2 4

O 3

S1

L1

L2 S2

L3 S3

M

Fig. 1i

Fig. 1j

*Fig. 2*

*Fig. 3a*

*Fig. 3b*

*Fig. 4a*  *Fig. 4b*  *Fig. 4c*  *Fig. 4d*

*Fig. 3c*

*Fig. 5*

*Fig. 6a*

*Fig. 6b*

7

**Fig. 6c**

**Fig. 6d**

*Fig. 7*

*Fig. 8a*

*Fig. 8b*

*Fig. 8c*

*Fig. 8d*

11

*Fig. 9a*

*Fig. 9b*

Fig. 10b

Fig. 10a

# $Fig.$ $10c$